# EUROPÄISCHE PATENTSCHRIFT

(11) **EP 1 389 273 B1**
(45) Veröffentlichungstag und Bekanntmachung des Hinweises auf die Patenterteilung: **11.10.2006**
(21) Anmeldenummer: 02729887.6
(22) Anmeldetag: 15.05.2002
(51) Int. Cl.: F02M 37/22

(54) **VERFAHREN ZUM ABFÜHREN VON IN EINEM KRAFTSTOFFFILTER ABGESCHIEDENEM WASSER UND VORRICHTUNG ZUR DURCHFÜHRUNG DIESES VERFAHRENS**
METHOD FOR EVACUATING WATER THAT HAS BEEN SEPARATED IN A FUEL FILTER AND A DEVICE FOR CARRYING OUT SAID METHOD
PROCEDE PERMETTANT D'EVACUER DE L'EAU SEPAREE DANS UN FILTRE A COMBUSTIBLE ET DISPOSITIF CORRESPONDANT

(30) Priorität: 22.05.2001 DE 10124887; 22.05.2001 DE 10124883; 27.12.2001 DE 10163770
(43) Veröffentlichungstag der Anmeldung: 18.02.2004
(73) Patentinhaber: MAHLE Filtersysteme GmbH, 70376 Stuttgart (DE)
(72) Erfinder: DITTMANN, Jörg, 70599 Stuttgart (DE); GÄNSWEIN, Matthias, 73732 Esslingen (DE); METZ, Frank, 71397 Leutenbach (DE); DE ABREU, Ricardo, Simoes, CEP-13280-000 Venhedo (BR); MANZATO, Edson, CEP-13805-019 Modi Mirim (BR)
(74) Vertreter: Patentanwalts-Partnerschaft Rotermund + Pfusch + Bernhard
(86) Internationale Anmeldenummer: PCT/DE2002/001732
(87) Internationale Veröffentlichungsnummer: WO 2002/095211

(56) Entgegenhaltungen:
- EP-A- 0 292 446
- EP-A- 0 806 564
- DE-A- 3 325 772
- DE-A- 4 409 570
- DE-A- 10 029 539
- DE-C1- 3 740 804
- DE-U- 9 408 687
- GB-A- 2 129 329
- US-A- 5 462 658
- PATENT ABSTRACTS OF JAPAN vol. 009, no. 279 (M-427), 7. November 1985 (1985-11-07) & JP 60 122266 A (NIPPON DENSO KK), 29. Juni 1985 (1985-06-29)

## Beschreibung

Die Erfindung betrifft ein Kraftstofffilter mit einer Wasserentleerungseinrichtung für Verbrennungsmotoren nach dem Oberbegriff des Patentanspruchs 1.

Ein solches Kraftstofffilter ist in der älteren Anmeldung DE 100 29 539 A1 beschrieben. Bei dieser Ausführung ist ein Ringfiltereinsatz mit einem radial außen eingeformten Freiraum zur Aufnahme der Verbindungsleitung der Wasserentleerungseinrichtung erforderlich.

Die Erfindung beschäftigt sich mit dem Problem, bei einem gattungsgemäßen Kraftstofffilter einen Ringfiltereinsatz vorsehen zu können, bei dem die Wasserentleerungseinrichtung die Ringform des Filtermaterials des Filtereinsatzes nicht durch eine für deren Aufnahme erforderliche Ausnehmung beeinträchtigt, wie beispielweise aus der EP-0 806 564 bekannt ist.

Eine Lösung dieses Problems zeigt ein gattungsgemäßes Kraftstofffilter mit den kennzeichnenden Merkmalen des Anspruchs 1 auf.

Zweckmäßige Ausgestaltungen sind Gegenstand der Unteransprüche.

Die Erfindung beruht auf dem allgemeinen Gedanken, sämtliche in einer Stirnseite eines gattungsgemäßen Kraftstofffilters vorzusehende Stutzen auf einer möglichst kleinen Kreisfläche unterbringen und damit einen durchmessermäßig möglichst kleinen Deckel des Kraftstofffilters erreichen zu können.

Ein erfindungsgemäßes Kraftstofffilter besitzt den großen Vorteil, dass nach außerhalb des Filters führende Anschlüsse an einer gleichen Stirnseite des Filtergehäuses, die insbesondere als ein mit einem Filtertopf verbundener Decke ausgebildet sein kann, angebracht werden können. Bei einem mit "Deckel oben" eingebauten Kraftstofffilter ist hierzu innerhalb des Filtergehäuses eine von dem unten liegenden Wassersammelraum zu der oben liegenden Stirnseite des Kraftstofffilters führende Wasserentleerungsleitung vorzusehen. Bei Vorhandensein einer Wasserstandssensoreinrichtung kann diese vorteilhafterweise mit der Wasserentleerungsleitung verbunden bzw. in diese integriert sein.

Soll der für das Abführen des abgeschiedenen Wassers erforderliche Druckunterschied zwischen dem Wassersammelraum und dem Ort, an dem das abgeschiedene Wasser abgeführt werden soll, durch den Betriebsdruck des Filters erzeugt werden und liegt dabei ein sehr hoher Betriebsdruck an, so ist das Verschlußventil, das zum Abführen des Wassers zu öffnen ist, zweckmäßigerweise als ein Druckentspannungsventil ausgebildet. Hohe Betriebsdrücke liegen beispielsweise bei einem Kraftstofffilter für einen Verbrennungsmotor bei laufendem Motor vor.

Bei einem Kraftstofffilter eines Verbrennungsmotors kann bei laufendem Motor beispielsweise eine Wasserentleerung sensorgesteuert vollautomatisch ohne einen personellen Wartungseingriff erfolgen. Das abgezogene Wasser kann in einen drucklosen Auffangbehälter außerhalb des Filters geführt werden, aus dem es wie bei einer automatischen Enteisungseinrichtung eines Kühlschrankes verdunstet werden kann. Das praktisch drucklose, aus dem Filter ausströmende Wasser kann selbstverständlich auf jegliche andere Weise entsorgt werden.

Als ein Druckentspannungsventil kann in äußerst rationeller Weise ein übliches Fahrzeugreifenventil verwendet werden, das selbstverständlich auch dem speziellen Gebrauch noch angepasst werden kann.

Der zum Abführen abgeschiedenen Wassers erforderliche Überdruck zwischen dem Wassersammelraum und dem Ort, an dem das Wasser entleert werden soll, kann auch durch eine mit dem Verschlußventil zusammenwirkende Saugpumpe erzeugt werden.

Die Erfindung in besonders charakteristischer Weise wiedergebende Ausführungsbeispiele sind in der Zeichnung dargestellt.

In dieser zeigen
- Fig. 1: einen Schnitt durch ein topfförmiges Kraftstofffilter nach den Stand der Technik,
- Fig. 2: eine Ansicht auf das Kraftstofffilter nach dem Pfeil II auf das Filter nach Fig. 1,
- Fig. 3: einen Schnitt mit lediglich ausschnittsweiser Darstellung nach Linie III-III in Fig. 2,
- Fig. 4: einen Schnitt in auszugsweiser Darstellung nach Linie IV-IV durch das Kraftstofffilter in Fig. 2,
- Fig. 5: einen Schnitt durch ein Kraftstofffilter in einer ersten Ausführungsvariante gemäss der Erfindung,
- Fig. 6: einen Schnitt durch ein Kraftstofffilter in einer alternativen Ausführung nach der Linie VI-VI in Fig. 7,
- Fig. 7: einen Querschnitt durch den oberen Bereich in dem Inneren des Kraftstofffilters nach Fig. 6.

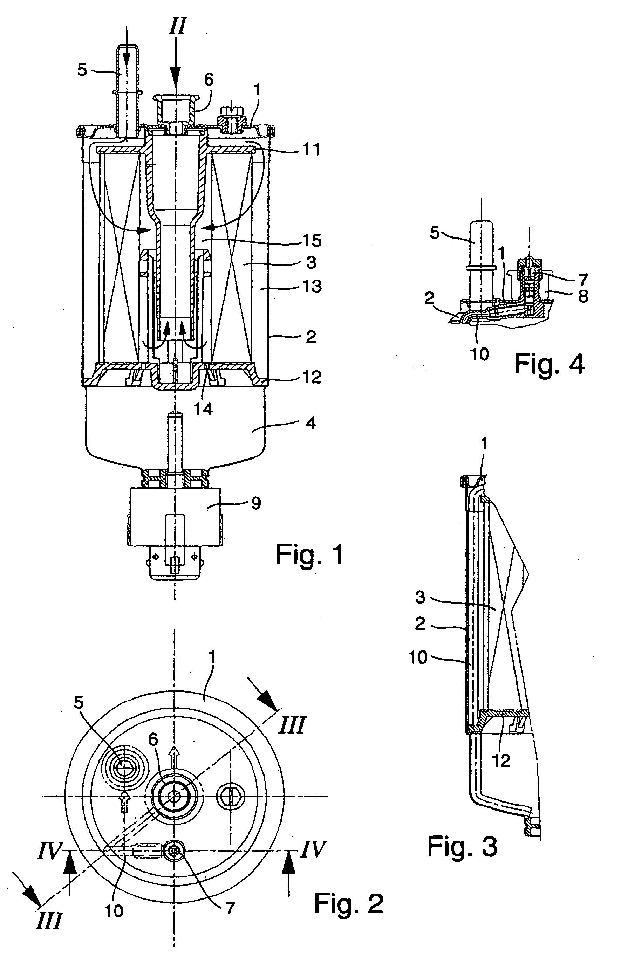

### Kraftstofffilter nach den Fig. 1 bis 4

In einem mit einem Deckel 1 verschlossenen Gehäusetopf 2 eines Kraftstofffilter eines Verbrennungsmotors eines Fahrzeuges befindet sich ein ringförmiger, von radial außen nach innen durchströmter Ringfiltereinsatz 3. An dem Verbrennungsmotor ist das Kraftstofffilter stehend, d.h. mit der Achse des Ringfiltereinsatzes 3 in Richtung der Fahrzeughochachse mit oben liegendem Deckel 1 angeordnet. Unten in dem Gehäusetopf 2 ist ein Wassersammelraum 4 für innerhalb des Kraftstofffilters ausgeschiedenes Wasser vorgesehen.

Innerhalb des Deckels 1 sind in das Filterinnere hinein- bzw. herausführende Stutzen vorgesehen, nämlich ein den Kraftstoff in das Filter einführender Zuführstutzen 5, ein den gereinigten Kraftstoff aus dem Filter abführender Abführstutzen 6 sowie ein mit einem Verschlußventil 7 versehener Wasser-Abführstutzen 8.

Von unten in den Wassersammelraum 4 greift eine Wasserstands-Sensoreinrichtung 9 ein. Grundsätzlich kann eine solche Sensoreinrichtung 9 bei einem nach dem erfindungsgemäßen Verfahren von abgeschiedenem Wasser zu entleerenden Kraftstofffilter auch fehlen. Ist eine Wasserstandssensoreinrichtung 9 vorhanden, so kann diese ein Signal zur Wasserentleerung geben oder selbsttätig das Verschlußventil 7 bei beispielsweise Motorbetrieb für eine automatische Wasserentleerung öffnen.

Das Verschlußventil 7 kann in einer besonders wirtschaftlichen Ausführung ein übliches Kraftfahrzeugreifenventil sein. Mit dem Wassersammelraum 4 ist der Wasserabführstutzen 8 bzw. das Verschlußventil 7 über eine Verbindungsleitung 10 aus beispielsweise einem flexiblen Kunststoffmaterial verbunden. Diese Leitung verläuft rohseitig des Ringfiltereinsatzes 3 in einem Raum zwischen dem Ringfiltereinsatz 3 und der Außenwand des Gehäusetopfes 2.

Der Ringfiltereinsatz 3 besitzt eine obere und untere Endscheibe 11 bzw. 12. Mit der unteren Endscheibe 12 ist der Ringfiltereinsatz 3 gegenüber dem Gehäusestopf 2 gedichtet. Die obere Endscheibe 11 besitzt dagegen einen Abstand gegenüber dem Gehäusetopf 2. Über diesen Abstand hinweg verläuft der Rohrraum 13 des Kraftstofffilters. Die Durchströmung des Kraftstofffilters ist mit Strömungspfeilen in Fig. 1 angedeutet.

Abgeschiedenes Wasser in dem Wassersammelraum 4 kann bei laufendem Verbrennungsmotor, d.h. in einem Zustand, in dem sich das Kraftstofffilter unter Betriebsdruck befindet, auf denkbar einfache Weise durch Öffnen des Verschlußventiles 7 über die Verbindungsleitung 10 nach außerhalb des Kraftstofffilters abgeführt werden. Die Zeitdauer, während der lediglich Wasser und noch kein nachfolgender Kraftstoff abgezogen wird, kann durch die Wasserstandssensoreinrichtung 9 gesteuert werden und zwar entweder automatisch oder durch eine Signalanzeige. Der Wassersammelraum 4 steht über Öffnungen 14 mit dem Reinraum 15 des Kraftstofffilters in Verbindung. Das aus dem gefilterten Kraftstoff abgeschiedene Wasser gelangt durch die Öffnungen 14 in den Wassersammelraum 4.

Für den Fall, dass eine Wasserentleerung nicht bei Betriebsdruck des Kraftstofffilters erfolgen soll, sondern über eine Saugpumpe als Hilfsmittel, kann anstelle eines Druckentspannungsventiles als Verschlußventil 7 ein einfaches, lediglich Öffnungs- und Schließfunktion ausübendes Verschlußventil eingesetzt werden.

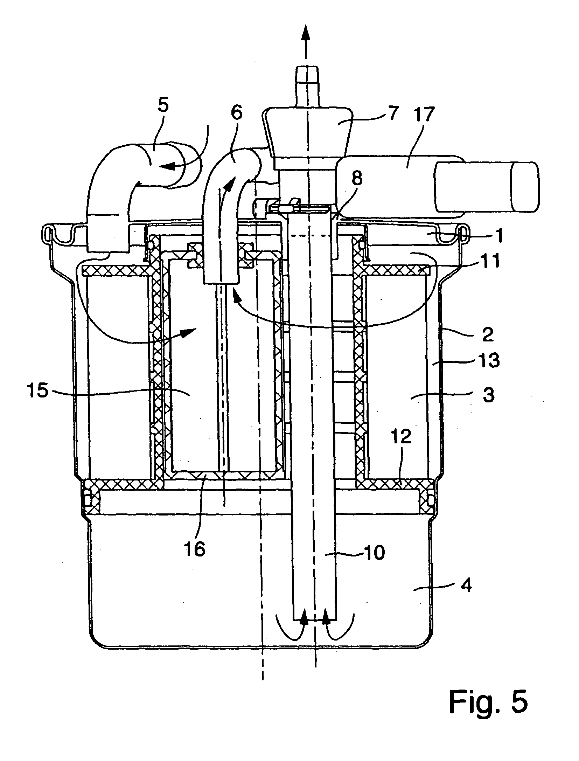

### Kraftstofffilter nach Fig. 5

Funktionell gleiche Teile sind hier mit den gleichen Bezugszahlen belegt wie bei dem Kraftstofffilter nach den Fig. 1 bis 4.

Abweichend von der Ausführung nach den Fig. 1 bis 4 durchläuft in dem gezeichneten, speziellen Ausführungsbeispiel der gereinigte Kraftstoff innerhalb des Filters noch vor dem Abführstutzen 6 eine Wasserabscheidevorrichtung 16.

Die Verbindungsleitung 10 wirkt in diesem Ausführungsbeispiel mit einer Wasserstandssensoreinrichtung 17 zusammen, die im Bereich der gleichen Stirnseite des Kraftstofffilters nach außen geführt ist, in der sämtliche, nach außen führende Stutzen angebracht sind.

Das Verschlußventil 7 kann im Prinzip bei allen gezeichneten Ausführungen an einer beliebigen Stelle innerhalb der zu entleerendes Wasser führenden Bereiche der Verbindungsleitung 10 vorgesehen sein. Soll das entleerte Wasser an eine entfernt von dem Kraftstofffilter liegende Stelle geführt werden, kann das Verschlußventil 7 auch dort angebracht sein. Damit ist eine hohe Gestaltungsfreiheit mit Bezug auf den Ort, an dem das abgeführte Wasser drucklos zur Entsorgung gebracht, aufgefangen oder verdunstet wird, gegeben. Das Verschlußventil 7 kann so ausgelegt sein, dass das Wasser praktisch drucklos zur Entsorgung aus dem Kraftstofffilter direkt aus dessen Gehäuse oder an eine entfernt liegenden Stelle austreten kann.

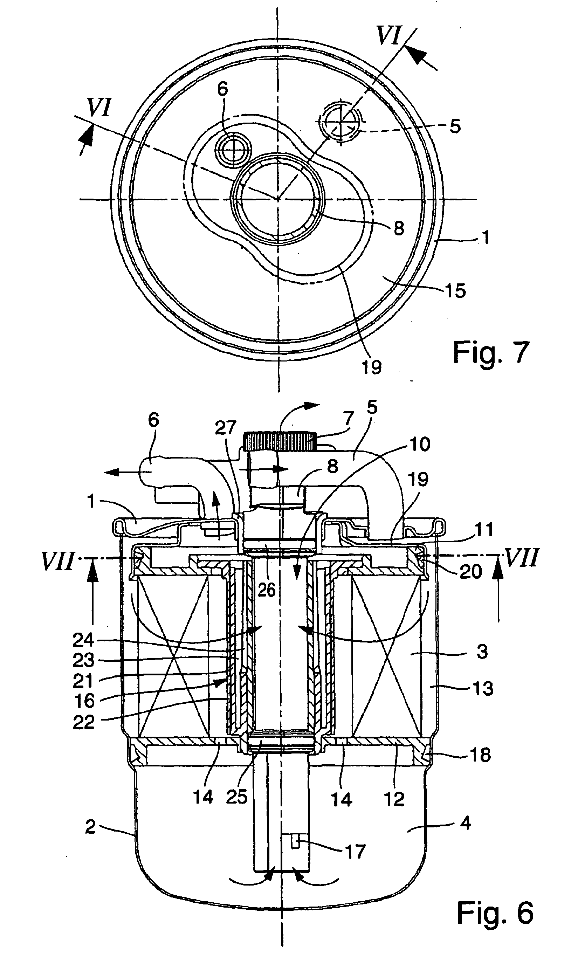

### Kraftstofffilter nach Fig. 6 und 7

Eine erfindungsgemäße Besonderheit besteht bei diesem Kraftstofffilter in dessen konstruktiver Gestaltung, bei der auch bei einem relativ geringen Durchmesser der Stirnseite des Kraftstofffilters sämtliche bei einem erfindungsgemäßen Filter erforderlichen Stutzen problemlos angebracht werden können. Die Verbindungsleitung 10 besitzt insbesondere einen in den Wassersammelraum 4 reichenden Sensor einer Wasserstandssensoreinrichtung 17.

Das Verschlußventil 7 ist eine von außen verdrehbare Schraube, in dessen Achse der Wasserabführstutzen 8 nach außen derart geführt ist, dass eine zu einer von außen anschließbare Pumpe führende Leitung beim Wasserentleeren temporär angeschlossen werden kann. Ist die Schraube des Verschlußventils 7 auf Anschlag eingedreht, so ist der Wasserabführstutzen 8 verschlossen, während eine Öffnung bei einem bereits teilweise herausgeschraubten Zustand gegeben ist.

Der Ringfiltereinsatz 3 besitzt axial dichtende Endscheiben, nämlich eine obere Endscheibe 11 und eine untere Endscheibe 12. Über die untere Endscheibe 12 ist der Ringfiltereinsatz 3 umfangsmäßig durch einen ersten Vierkantring 18 gegenüber dem Gehäusetopf 2 gedichtet. Dadurch besteht zwischen dem Ringfiltereinsatz 3 und dem Gehäusetopf 2 ein Rohraum 13, der im Bereich der oberen Endscheibe 11 gegenüber einem mit dem Abführstutzen 6 verbundenen Reinraum 15 gedichtet ist.

Diese Dichtung ist wie folgt ausgebildet.

Zunächst einmal ist die obere Endscheibe 11 in einer Verbindungswand 19 aus beispielsweise geformtem Blech umfangsmäßig über einen zweiten Vierkantring 20 gedichtet. Hierzu liegt die obere Endscheibe 11 radial außen in einem ersten kreiszylindrischen, zur oberen Endscheibe 11 hin von oben nach unten offen auslaufenden kragenförmigen Bereich der Verbindungswand 19 an. Dieser erste zylindrische Bereich besitzt übereinstimmend mit der oberen Endscheibe 11 eine kreiszylindrische Form und ist zentrisch zur gemeinsamen Achse des Ringfiltereinsatzes 3 und Gehäusetopfes 2 ausgerichtet. Gegenüber dem Deckel 1 ist die Verbindungswand 19 durch einen zweiten zylindrischen Bereich an den Deckel 1 dicht durch beispielsweise ein Verlöten, angelegt. Dieser zweite zylindrische Bereich ist dabei nicht kreiszylindrisch, sondern besitzt in Umfangsform eine Art Nierenform. Diese Nierenform besitzt den Vorteil, dass die Stutzen 5 und 6, das heißt, der Zuführ- und der Abführstutzen, auf dem Deckel 1 mit einem insgesamt geringen Außenumfang dieses Deckels 1 angebracht werden können. Besäße der an den Deckel 1 angreifende zweite zylindrische Abschnitt der Verbindungswand Kreisform, so wäre bei der Fläche des Deckels 1 in der gezeichneten Ausführungsform für den Stutzen 5 bei einer Zuordnung zu dem Rohraum 13 kein Platz mehr vorhanden. Der Reinraum 15 grenzt von radial innen an den nierenförmigen, zweiten zylindrischen Bereich der Verbindungswand 19.

Die Strömung des Kraftstoffes durch das Kraftstofffilter ist in der Zeichnung durch Strömungspfeile angedeutet.

Die reinseitig des Ringfiltereinsatzes 3 in diesem, das heißt, in dessen Endscheiben 11 und 12 gelagerte Wasserabscheidevorrichtung 16 ist hier achssymmetrisch gelagert. Sie besteht aus einer Art zylindrischem Siebkorb 21, das heißt einem insbesondere kreiszylindrischen Gebilde, bei dem beispielsweise zwischen axial verlaufenden Stegen 22 über den Umfang verteilt ein feines Sieb 23 durch die Stege 22 hindurch verlaufen kann. Bei einer Fertigung der Wasserabscheidevorrichtung 16 aus Kunststoff bedeutet dies, dass das Sieb 23 beispielsweise radial beidseitig im Kunststoff der Stege 22 eingeformt ist. Radial im Inneren des Siebkorbes 21 befinden sich über den Umfang verteilt radial von dem Sieb 23 beabstandete, innere axiale Stege 24, an denen sich das Sieb 23 gegebenenfalls abstützen kann. Die Stege 24 können an einem axialen Ende (in der Zeichnung oben) frei auslaufen.

Die untere Endscheibe 12 umfasst radial innen zumindest nahezu dicht die Wasserabscheidevorrichtung 16, das heißt dort an dem Sieb 23 führen umfangsmäßig verteilte Öffnungen 14 in den Wassersammelraum 4. Die Verbindungsleitung 10 mit der Wasserstandssensoreinrichtung 17, die in diese Leitung 10 integriert ist, ist im Bereich der oberen und unteren Endscheibe 11 beziehungsweise 12 des Ringfiltereinsatzes nach radial außen gedichtet. Im Bereich der unteren Endscheibe 12 erfolgt diese Dichtung gegenüber der Verbindungsleitung 10 über einen ersten O-Ring 25. Im Bereich der oberen Endscheibe 11 ist eine radiale Dichtung über einen zweiten O-Ring 26 gegenüber einer Aufnahme 27 des Abführstutzens 8 gegeben.

Die Wasserstandssensoreinrichtung 17 ist als integrierter Teil in der Verbindungsleitung 10 zusammen mit dieser aus dem Gehäuse des Kraftstofffilters durch dessen Deckel 1 herausziehbar. Zur Arretierung der Verbindungsleitung 10 innerhalb des Deckels 1 ist dort zwischen dem Deckel 1 und der Verbindungsleitung 10 ein zeichnerisch nicht erkennbarer Bajonettverschluss vorgesehen, der noch zusätzlich gegen ein Lösen durch Verdrehen gesichert sein kann.

Der Deckel 1 und der Gehäusetopf 2 sind bei einem erfindungsgemäßen Kraftstofffilter üblicherweise unlösbar fest miteinander verbunden. Zwingend muss dies allerdings nicht der Fall sein. Das Gehäuse 2 und der Deckel 1 sind vorteilhafter Weise aus Blech. Aus Blech ist üblicherweise auch die Verbindungswand 19. Die Endscheiben 11 und 12 des Ringfiltereinsatzes 3 sind zweckmäßigerweise aus Kunststoff. Aus Kunststoff ist auch vorteilhafterweise die Verbindungsleitung 10. Die Stutzen 5 und 6 wiederum sollten aus Metall bei einem Deckel 1 aus Metall sein.

Die Aufnahme 27 für den Stutzen 8 kann auch zur Aufnahme anderer Einsätze als der Verbindungsleitung 10 dienen, wobei dann ebenfalls die Vorteile der nierenförmigen Form der kragenförmigen Verbindungswand 19 in deren zweitem zylindrischen Bereich, in dem diese Verbindungswand an den Deckel 1 angebunden ist, voll wirksam werden. Andere Einsätze können beispielsweise eine Kraftstoffheizeinrichtung oder Ventile sein.

## Patentansprüche

1. Kraftstofffilter eines Verbrennungsmotors mit
- einem radial durchströmbaren, in Einbaulage in Fahrzeughochachse ausgerichteten Ring-Filtereinsatz in einem austauschbar an Leitungen eines Kraftstoffversorgungssystems anschließbaren Filtergehäuse,
- einem mit einer Wasserentleerungseinrichtung versehenen Wassersammelraum für aus dem Kraftstoff in das Filtergehäuse austretendes Wasser,
- einem roh- und reinseitigen Kraftstoff-Zu- bzw. Ablaufstutzen in einem gleichen, in Fahrzeughochachse oben liegenden, axialen ersten Stirnbereich des Kraftstofffilters, wobei diese Stutzen als unlösbare Bestandteile dieses Stirnbereiches aus diesem nach axial außen abstehen,
- einer von der Wasserentleerungseinrichtung umfassten, von dem Wassersammelraum zu einem in dem ersten Stirnbereich des Kraftstofffilters vorgesehenen Verschlussventil führenden Verbindungsleitung,
- einer oberen, runden Ring-Endscheibe des Ringfiltereinsatzes, die der ersten Stirnseite des Kraftstofffilters mit Abstand zugeordnet ist,
**gekennzeichnet durch** die Merkmale
- die roh- und reinseitigen Kraftstoff-Zu- und Ablaufstutzen (5, 6) liegen außerhalb der Achse des Ringfiltereinsatzes (3),
- die Verbindungsleitung (10) durchläuft den zentralen Innenraum des Ringfiltereinsatzes (3), wobei sie **durch** die erste Stirnseite des Kraftstofffilters gegenüber dieser gedichtet hindurchgeführt ist,
- in dem **durch** den Abstand gebildeten Raum zwischen der oberen Ring-Endscheibe (11) und der ersten Stirnseite des Kraftstofffilters ist eine Verbindungswand (19) mit dichten Anschlüssen an einenends die obere Ring-Endscheibe (11) und anderenends an die Stirnseite des Kraftstofffilters vorgesehen,
- der zwischen der Verbindungswand (19) und der oberen Ring-Endscheibe (11) liegende Raum ist ausschließlich jeweils direkt mit dem zentralen Innenraum des RingFiltereinsatzes (3) und dem diesem zugeordneten Zu- bzw. Abführkanal (5, 6) verbunden.

2. Kraftstofffilter nach Anspruch 1,
**dadurch gekennzeichnet,**
**dass** die Verbindungsleitung (10) innerhalb des zentralen Innenraumes des Ringfiltereinsatzes (3) exzentrisch angeordnet ist.

3. Kraftstofffilter nach Anspruch 1 oder 2,
**gekennzeichnet durch** die Merkmale
- die Verbindungswand (19) ist in ihrem jeweiligen Anschlussbereich
- an die obere Endscheibe (11) zentrisch rund zu der Kraftstofffilterachse und
- an die Stirnseite des Kraftstofffilters mit über ihren Umfang nach radial außen gegenüber der Kraftstofffilterachse variierenden Abständen
ausgebildet.

4. Kraftstofffilter nach einem der vorhergehenden Ansprüche,
**gekennzeichnet durch** die Merkmale
- der Ringfiltereinsatz (3) ist mit seiner unteren Endscheibe (12) radial außen an dem Gehäusetopf (12) gedichtet und wird von radial außen nach innen durchströmt,
- der Wassersammelraum (4) liegt unterhalb der unteren Endscheibe (12),
- der im radialen Zentrum des Ringfiltereinsatzes (3) gelegene Reinraum (15) ist mit dem Wassersammelraum (4) wasserleitend verbunden,
- die Verbindungsleitung (10) durchgreift die untere Endscheibe (12), wobei sie gegenüber dieser gedichtet ist.

5. Kraftstofffilter nach einem der vorhergehenden Ansprüche,
**dadurch gekennzeichnet,**
**dass** die Verbindungswand (19) in ihrem Anschlussbereich für die obere Endscheibe (11) als runder Kragen ausgebildet ist, in den die obere Endscheibe (11) von radial innen eingreift, wobei sie durch eine Radialdichtung (26) radial gegen diese gedichtet ist.

6. Kraftstofffilter nach einem der vorhergehenden Ansprüche,
**dadurch gekennzeichnet,**
**dass** die obere Endscheibe (11) aus Kunststoff und die Verbindungswand (19) aus Metall ausgebildet sind.

7. Kraftstofffilter nach Anspruch 2,
**dadurch gekennzeichnet,**
**dass** innerhalb des zentralen Innenraums des Ringfiltereinsatzes (3) eine hohlzylindrische Wasserabscheideeinrichtung (16) mit fluiddurchlässigen Außenwänden vorgesehen ist, wobei der Abführstutzen (6) dicht in das Innere der Wasserabscheideeinrichtung geführt ist und von dort den gereinigten Kraftstoff aus dem Inneren des Kraftstofffilters herausführt.

8. Kraftstofffilter nach Anspruch 3,
**dadurch gekennzeichnet,**
**dass** dem ringförmigen Filtermaterial stromab innerhalb des Reinraumes (15) ein rohrförmiges Sieb als Wasserabscheideeinrichtung (16) nachgeschaltet ist.

9. Kraftstofffilter nach einem der vorhergehenden Ansprüche,
**dadurch gekennzeichnet,**
**dass** eine Wassersensoreinrichtung (9) in die Verbindungsleitung (10) integriert ist.

## Claims

1. A fuel filter for a combustion engine having
- a filter insert allowing radial flow that is installed in aligment with the vertical axis of the vehicle,
- a water collection chamber equipped with a water evacuation device for water extracted from the fuel,
- a port for supply and discharge of fuel respectively on the untreated and clean sides in an identical axial first frontal area of the filter, located uppermost along the vertical axis of the vehicle,
- a connection hose enclosed by the water evacuation device and leading from the water collection chamber to a shut-off valve provided in the first frontal area of the fuel filter,
wherein
- the connection hose (10) runs through the interior cavity at the centre of the annular filter insert (3), wherein it passes through the first frontal surface of the fuel filter and is sealingly insulated therefrom,
- an upper, round ring end plate (11) of the annular filter insert (3) is assigned to and located at distance from the first frontal surface of the fuel filter.

2. The fuel filter according to claim 1,
**characterized in that**
the connection hose (10) is arranged eccentrically within the centre space inside the annular filter insert (3).

3. The fuel filter according to claim 1 or 2,
wherein
- the connection wall (18) is conformed in the respective connection areas
- centrally round to the axis of the fuel filter at the upper end plate (11) and
- with varying radially outward distances relative to the axis of the fuel filter over its entire circumference at the frontal surface of the fuel filter.

4. The fuel filter according any of the preceding claims,
wherein
- the annular filter insert (3) is radially outwardly sealed with its lower end plate (12) at the housing pan (12)and allows fluids to flow radially inwards from the periphery,
- the water collection chamber (4) is located below the lower end plate (12),
- the treated fuel chamber (15) in the radial centre of the annular filter insert (3) is connected with the water collection chamber (4) to allow the transport of water,
- the connection hose (10) protrudes through the lower end plate (12) and is sealingly insulated therefrom.

5. The fuel filter according to one of the preceding claims,
**characterized in that**
the connection wall (18) is constructed in its connection area for the upper end plate (11) as a round collar, with which the upper end plate (11) engages radially from the inside, and is sealingly insulated therefrom by a radial seal (25).

6. The fuel filter according to one of the preceding claims,
**characterized in that**
the upper end plate (11) is made from plastic and the connection wall (18)is made from metal.

7. The fuel filter according to claim 2,
**characterized in that**
a hollow-cylindrical water separation device (16) is provided within the centre space of the annular filter insert (3) and has liquid-permeable outer-walls, wherein the discharge port element (6) passes in sealed manner into the interior of the water separation device and from there extracts the cleaned fuel from inside the fuel filter.

8. The fuel filter according to claim 3,
**characterized in that**
a tubular sieve is included as a water separation device (16) downstream from the annular filter material and inside the treated fuel chamber (15).

9. The fuel filter according to one of the preceding claims,
**characterized in that**
a water sensor device (9) is incorporated in the connection hose (10).

## Revendications

1. Filtre à carburant d'un moteur à combustion interne, comprenant
- une cartouche filtrante annulaire pouvant être balayée dans la direction radiale, orientée en position de montage dans l'axe vertical du véhicule, dans un boîtier filtrant raccordable de façon interchangeable à des conduites d'un système d'alimentation en carburant,
- un espace collecteur d'eau muni d'un dispositif de purge d'eau pour de l'eau s'échappant du carburant dans le boîtier filtrant,
- une tubulure d'arrivée et/ou de sortie du carburant côté brut et côté épuré dans une même première zone frontale axiale, située en partie haute dans l'axe vertical du véhicule, du filtre à carburant, ces tubulures dépassant, en tant que composants inamovibles de cette zone frontale, de cette dernière dans la direction axiale extérieure,
- une conduite de raccordement entourée par le dispositif de purge d'eau, menant de l'espace collecteur d'eau à une soupape de fermeture prévue dans la première zone frontale du filtre à carburant,
- un disque d'extrémité annulaire supérieur, rond, de la cartouche filtrante annulaire, qui est associé à distance au premier côté frontal du filtre à carburant,
**caractérisé par** les caractéristiques
- les tubulures d'arrivée et de sortie (5, 6) du carburant côté brut et côté épuré se situent à l'extérieur de l'axe de la cartouche filtrante annulaire (3),
- la conduite de raccordement (10) passe au travers de l'espace intérieur central de la cartouche filtrante annulaire (3), en étant guidée de façon étanche au travers du premier côté frontal du filtre à carburant,
- une paroi d'assemblage (19) avec des raccords étanches sur le disque d'extrémité supérieur annulaire (11), sur une extrémité, et sur le côté frontal du filtre à carburant, sur l'autre extrémité, est prévue dans l'espace formé par l'écartement entre le disque d'extrémité annulaire supérieur (11) et le premier côté frontal du filtre à carburant,
- l'espace situé entre la paroi d'assemblage (19) et le disque d'extrémité supérieur annulaire (11) est raccordé exclusivement de façon directe à l'espace intérieur central de la cartouche filtrante annulaire (3) et au conduit d'arrivée et/ou de sortie (5, 6) associé à cette dernière.

2. Filtre à carburant suivant la revendication 1, **caractérisé en ce que** la conduite de raccordement (10) est disposée de façon excentrée à l'intérieur de l'espace intérieur central de la cartouche filtrante annulaire (3).

3. Filtre à carburant suivant l'une des revendications 1 et 2, **caractérisé par** les caractéristiques
- la paroi d'assemblage (19) est configurée dans sa zone de raccordement respective
- de façon centrée et circulaire sur le disque d'extrémité supérieur (11) par rapport à l'axe du filtre à carburant et
- sur le côté frontal du filtre à carburant, avec des distances variant sur son pourtour dans la direction radiale extérieure par rapport à l'axe du filtre à carburant.

4. Filtre à carburant suivant l'une des revendications précédentes, **caractérisé par** les caractéristiques
- la cartouche filtrante annulaire (3) est étanchéifiée par son disque d'extrémité inférieur (12), dans la direction radiale extérieure, sur le boîtier en pot (12) et est balayée de la direction radiale extérieure vers l'intérieur,
- l'espace collecteur d'eau (4) se situe au-dessous du disque d'extrémité inférieur (12),
- l'espace épuré (15), placé dans le centre radial de la cartouche filtrante annulaire (3), est relié en conduction d'eau avec l'espace collecteur d'eau (4),
- la conduite de raccordement (10) pénètre au travers du disque d'extrémité inférieur (12), en étant étanchéifiée par rapport à ce dernier.

5. Filtre à carburant suivant l'une des revendications précédentes, **caractérisé en ce que** la paroi d'assemblage (19) est configurée sous forme de collet rond dans sa zone de raccordement pour le disque d'extrémité supérieur (11), collet dans lequel s'engage de la direction radiale intérieure le disque d'extrémité supérieur (11), en étant étanchéifié par un joint radial (26) par rapport à ce dernier.

6. Filtre à carburant suivant l'une des revendications précédentes, **caractérisé en ce que** le disque d'extrémité supérieur (11) est réalisé en matière plastique et la paroi d'assemblage (19) en métal.

7. Filtre à carburant suivant la revendication 2, **caractérisé en ce qu'**un dispositif de séparation d'eau (16) cylindrique et creux avec des parois extérieures perméables aux fluides est prévu à l'intérieur de l'espace intérieur central de la cartouche filtrante annulaire (3), la tubulure de sortie (6) étant guidée hermétiquement dans l'intérieur du dispositif de séparation d'eau et en évacuant le carburant épuré de l'intérieur du filtre à carburant.

8. Filtre à carburant suivant la revendication 3, **caractérisé en ce qu'**un tamis tubulaire en tant que dispositif de séparation d'eau (16) est monté en aval du matériau filtrant annulaire à l'intérieur de l'espace épuré (15).

9. Filtre à carburant suivant l'une des revendications précédentes, **caractérisé en ce que** le dispositif de détection du niveau d'eau (9) est intégré dans la conduite de raccordement (10).
